# EUROPEAN PATENT APPLICATION

(11) **EP 3 427 869 A1**
(43) Date of publication of application: **16.01.2019**
(21) Application number: 18182078.8
(22) Date of filing: 06.07.2018
(51) Int. Cl.: B22F 3/105, B23K 11/00, B33Y 80/00, B33Y 10/00

(54) **ADDITIVE MANUFACTURING METHODS AND RELATED COMPONENTS**

(30) Priority: 13.07.2017 IN 201741024729
(71) Applicant: General Electric Company, Schenectady, NY 12345 (US)
(72) Inventor: ORUGANTI, Ramkumar Kashyap, 560066 Karnata Bangalore (IN); DUCLOS, Steven Jude, Clifton Park, NY New York 12065 (US); CARTER, William Thomas, Niskayuna, NY New York 12309 (US)
(74) Representative: Foster, Christopher Michael

(57) **Abstract**

An additive manufacturing method (200) is presented. The method (200) includes arranging a plurality of prefabricated blocks (106) to form a plurality of layers (104) in a predefined manner, melting one or more portions of each prefabricated block (106) of the plurality of prefabricated blocks (106), and cooling a melt of the one or more portions of said each prefabricated block (106) to bond the plurality of prefabricated blocks (106) to each other to form an additively manufactured component (100). An additively manufactured component (100) including a plurality of prefabricated blocks (106) is also presented.

## Description

### BACKGROUND

The present disclosure relates generally to additive manufacturing methods and, more particularly, to additive manufacturing methods for manufacturing components, and additively manufactured components thereof.

Additive manufacturing technology involves manufacturing three-dimensional (3D) components by building up substantially two-dimensional layers (or slices) on a layer-by-layer basis, and enables the "3D-printing" of components. Each layer is generally very thin (for example, between 20 to 100 microns) and many layers are formed in a sequence with the two-dimensional shape varying on each layer to provide the desired final three-dimensional profile. The technology builds up components using materials which are available in fine powder form. A range of different metals, plastics and composite materials may be used. In contrast to traditional "subtractive" manufacturing processes where material is removed to form a desired component profile, additive manufacturing techniques progressively add material to form a net shape or near-net shape final component. Examples of commercially available additive manufacturing techniques include extrusion-based techniques, jetting, selective laser sintering, powder/binder jetting, electron-beam melting, stereolithographic processes, and ultrasonic processes.

Additive manufacturing provides various advantages including good mechanical properties and ease of making highly complex structures, over traditional manufacturing processes. However, use of additive manufacturing may be limited because of some shortcomings. Components and products manufactured with the conventional additive manufacturing processes may generally have significant surface roughness and poor surface finish, in particular, surface porosity and cracks. These deficiencies may lead to overall poor mechanical properties, reduced part fatigue life, accumulation of material against rough surfaces, flow and turbulence problems for circulating fluids, and fluid leakage from the porosity. Furthermore, it may be challenging to build sections with overhangs using the powder method. As a result, the conventional additive manufacturing techniques are typically avoided in product design. In addition, these conventional additive manufacturing techniques are generally time consuming and expensive for large scale production with a reasonable rate.

### BRIEF DESCRIPTION

Provided herein are improved methods for manufacturing components using additive manufacturing. In one aspect of the specification, an additive manufacturing method includes arranging a plurality of prefabricated blocks to form a plurality of layers in a predefined manner, melting one or more portions of each prefabricated block of the plurality of prefabricated blocks, and cooling a melt of the one or more portions of said each prefabricated block to bond the plurality of prefabricated blocks to each other to form an additively manufactured component.

Another aspect of the specification is directed to an additively manufactured component that includes a plurality of prefabricated blocks coupled to each other to form a plurality of layers arranged in a predefined manner.

### BRIEF DESCRIPTION OF DRAWINGS

These and other features and aspects of embodiments of the invention will become better understood when the following detailed description is read with reference to the accompanying drawings in which like characters represent like parts throughout the drawings, wherein:
Fig. 1 schematically illustrates an additively manufactured component including a plurality of prefabricated blocks, in accordance with some embodiments of the present specification;
Fig. 2 illustrates a schematic of a prefabricated block, in accordance with some embodiments of the present specification;
Fig. 3 is a flow chart of an additive manufacturing method, in accordance with embodiments of the present specification;
Fig. 4 illustrates a schematic representation of one or more steps an additive manufacturing method, in accordance with some embodiments of the present specification; and
Fig. 5 illustrates a schematic representation one or more steps an additive manufacturing method, in accordance with some embodiments of the present specification.

### DETAILED DESCRIPTION

The present disclosure generally encompasses methods for manufacturing components using additive manufacturing. As discussed in detail below, some embodiments of the present disclosure present an additive manufacturing method for manufacturing a component using a plurality of prefabricated blocks. Some embodiments relate to an additively manufactured component that comprises a plurality of prefabricated blocks coupled to each other to form a plurality of layers arranged in a predefined manner. Utilizing the prefabricated blocks for forming a component using an additive manufacturing method advantageously overcome the above noted shortcomings.

The terms, as used herein, "additive manufacturing" and "additive manufacturing method" refer to methods for manufacturing components using additive manufacturing technology, and these may be used interchangeably throughout the specification.

The additive manufacturing technology forms net or near-net shape structures through sequentially and repeatedly depositing and joining material layers. As used herein "near-net shape" means that a component is formed very close to the final shape of the component, not requiring significant traditional mechanical finishing techniques such as machining or grinding following the additive manufacturing. As used herein "net shape" means that the component is formed with the final shape of the component, not requiring any traditional mechanical finishing techniques such as machining or grinding following the additive manufacturing. Suitable additive manufacturing techniques include, but are not limited to, Direct Metal Laser Melting (DMLM), Direct Metal Laser Sintering (DMLS), Direct Metal Laser Deposition (DMLD), Laser Engineered Net Shaping (LENS), Selective Laser Sintering (SLS), Selective Laser Melting (SLM), Electron Beam Melting (EBM), Fused Deposition Modeling (FDM), Selective Heat Sintering (SHS), Multi-jet Fusion (MJF), Ultrasonic Additive Manufacturing (UAM), or combinations thereof.

In the following specification and the claims, the singular forms "a", "an" and "the" include plural referents unless the context clearly dictates otherwise. As used herein, the term "or" is not meant to be exclusive and refers to at least one of the referenced components being present and includes instances in which a combination of the referenced components may be present, unless the context clearly dictates otherwise.

Unless defined otherwise, technical and scientific terms used herein have the same meaning as is commonly understood by one of skill in the art to which this disclosure belongs. The terms "comprising," "including," and "having" are intended to be inclusive, and mean that there may be additional elements other than the listed elements. The terms "first", "second", and the like, as used herein do not denote any order, quantity, or importance, but rather are used to distinguish one element from another.

As used herein, the term "prefabricated block" refers to a building block that includes a solid three-dimensional piece of a material of any shape and size such that a plurality of prefabricated blocks can be closely packed while arranging adjacent to each other to form a component. A suitable material is a material that can be formed or fabricated in form of a solid three-dimensional piece i.e., a building block. Suitable materials are discussed in details below. In some embodiments, a prefabricated block is cast from a metallic material. The prefabricated block may have a size depending on a size of a desired component. In some embodiments, a prefabricated block has a volume up to 1/100^{th} of a volume of the component. In some embodiments, a prefabricated block has a volume in a range from about 1 millimeter³ to about 1000 centimeter³. In some embodiments, a prefabricated block has a volume in a range from about 2 millimeter³ to about 100 centimeter³. In certain embodiments, a prefabricated block has a volume in a range from about 5 millimeter³ to about 10 centimeter³, and in some particular embodiments, from about 5 millimeter³ to about 5 centimeter³. A plurality of prefabricated blocks may be arranged in a layer-by-layer basis in a predefined manner to form a desired component.

As used herein, the term "predefined manner" refers to a layout of a structure or geometry in which the plurality of prefabricated blocks should be arranged to form the desired component.

As used herein, the term "coupled" refers to securely bonded or joined prefabricated blocks to each other using, for example a bonding material. In some embodiments, a plurality of prefabricated blocks may be bonded or joined by melting one or more portions of each prefabricated block of the plurality of prefabricated blocks and cooling the melt to bond the one or more portions of adjacent prefabricated blocks of the plurality of prefabricated blocks. In these instances, the melt acts as a bonding material.

Some embodiments of the present disclosure are directed to a method for manufacturing a component using additive manufacturing i.e., an additive manufacturing method. The component may also be referred to as an additively manufactured component. The additive manufacturing method includes arranging a plurality of prefabricated blocks to form a plurality of layers in a predefined manner, melting one or more portions of each prefabricated block of the plurality of prefabricated blocks, and cooling a melt of the one or more portions of said each prefabricated block to bond the plurality of prefabricated blocks arranged in the plurality of layers to each other to form the additively manufactured component. In some embodiments, the method further includes forming at least one prefabricated block of the plurality of prefabricated blocks for example, by casting or additive manufacturing.

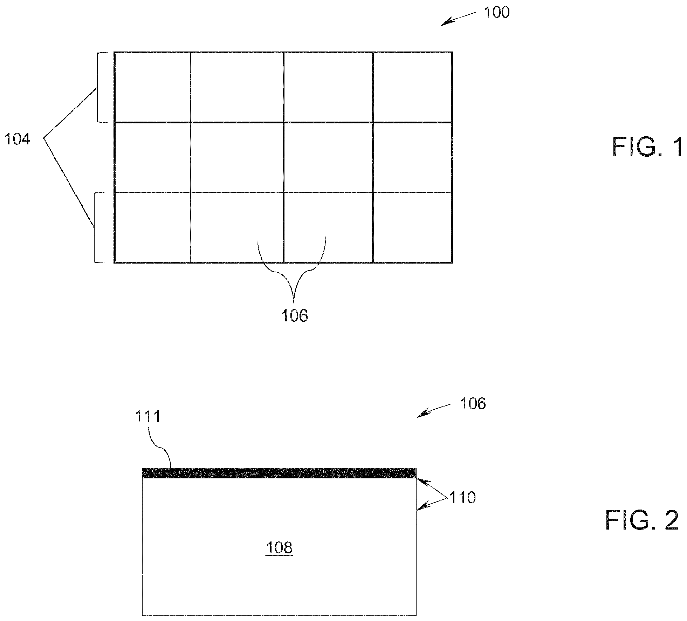

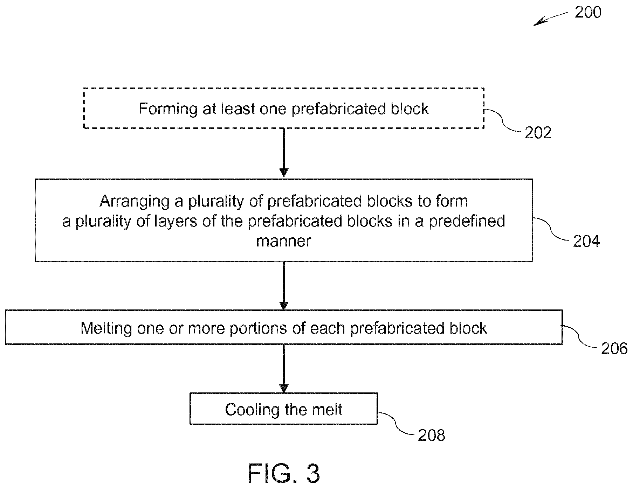

In some embodiments, an additive manufacturing method for manufacturing a component 100, for example an additively manufactured component as illustrated in Fig. 1 is described with reference to Figures 3-5. The additively manufactured component 100 includes a plurality of prefabricated blocks 106 coupled to each other to form a plurality of layers 104 arranged in a predefined manner.

In some embodiments, at least one prefabricated block 106 of the plurality of prefabricated blocks 106 may have a polygon shape. In some embodiments, the at least one prefabricated block 106 has a cross-section selected from a group consisting of a square, a rectangle, a hexagon, and combinations thereof. In certain embodiments, the at least one prefabricated block 106 is a cube or a cuboid in shape. However, other shapes having other cross-sections are also envisioned within the purview of the present specification.

Furthermore, in some embodiments, the plurality of prefabricated blocks 106 may include prefabricated blocks 106 of same or different shapes and sizes. The shape and size of a prefabricated block 106 of the plurality of prefabricated blocks 106 may depend on a location of the prefabricated block 106 in the arrangement of the plurality of prefabricated blocks 106 in the predefined manner. For example, in some embodiments, the plurality of prefabricated blocks 106 includes a cube-shaped prefabricated block, a cuboid-shaped prefabricated block or a combination thereof. Moreover, at least one prefabricated block 106 of the plurality of prefabricated blocks 106 may have flat or curved faces/surfaces. In certain embodiments, each surface of the at least one prefabricated block 106 is flat. However, in some embodiments, the at least one prefabricated block 106 may have at least one surface curved depending on the location of the at least one prefabricated block 106 in the arrangement of the plurality of prefabricated blocks 106 to form a desired component. In some embodiments, at least one prefabricated block 106 of a desirable shape and size may be formed by casting. In some embodiments, at least one prefabricated block 106 of a desirable shape and size may be formed by additive manufacturing.

Suitable materials for the plurality of prefabricated blocks 106 include, but are not limited to, metals, ceramics, polymers, plastics, glass, fibers, composites, biological matters, or combinations thereof. In some embodiments, at least one prefabricated block 106 of the plurality of prefabricated blocks 106 includes a metallic material. In some embodiments, the at least one prefabricated block 106 is formed by casting the metallic material. In some embodiments, the at least one prefabricated block 106 is formed of the metallic material using additive manufacturing. The metallic material may include a metal in an elemental form or an alloy. In some embodiments, the alloy includes a metal selected from a group consisting of nickel, iron, copper, aluminum, chromium, titanium, tungsten, gold, silver or combinations thereof. In some embodiments, the alloy includes a superalloy for example, a nickel-based precipitation strengthened superalloy. In some embodiments, at least one prefabricated block 106 of the plurality of prefabricated blocks 106 includes the metallic material in a single crystal form, a directionally solidified form or a polycrystalline form. In some embodiments, each prefabricated block 106 of the plurality of prefabricated blocks 106 may be formed in a single crystal form, a directionally solidified form, or a polycrystalline form.

The plurality of prefabricated blocks 106 may include same or different materials. The materials may be different in regard to their compositions, microstructures, or combinations thereof, as discussed above. In some embodiments, the plurality of prefabricated blocks 106 includes at least one prefabricated block 106 in a portion of the component 100 having a different material from a material of at least one prefabricated block 106 in another portion of the component 100. For example, a portion of the component 100 such as a layer of the plurality of layer 104 may include at least one prefabricated block 106 composed of a first material and another portion such as another layer of the plurality of layer 104 may include at least one prefabricated block 106 formed of a second material. In some of these embodiments, the plurality of prefabricated blocks 106 including different materials may be arranged such as to result in a compositionally/functionally graded component. That is, the material composition of the component 100 gradually varies in one or more directions.

In some embodiments, at least one prefabricated block 106 of the plurality of prefabricated blocks 106 may include at least two portions including different materials. For example, a first portion of the prefabricated block 106 includes a first material and a second portion includes a second material. Fig. 2 illustrates a schematic of a prefabricated block 106, in some embodiments. The prefabricated block 106 has a base 108 and an outer surface 110. In some embodiments, the base 108 includes a first material for example, a first alloy and at least a portion 111 of the outer surface 110 includes a second material, for example a second alloy. The first material is different from the second material. In some embodiments, the second material has a lower melting temperature as compared to a melting temperature of the first material. For the illustration purposes, Fig. 2 shows a prefabricated block 106 having a portion 111 of the outer surface 110 on one face of the base 108. However, depending on the shape of the prefabricated block 106 and the location of the prefabricated block 106 in the arrangement of the plurality of prefabricated blocks 106 (Fig. 1) to form the component 100, the prefabricated block 106 may include the second material on other portions (for example, other faces) of the outer surface 110 of the prefabricated block 106. The presence of the second material on one or more portions of the outer surface 110 of the prefabricated block 106 may help in melting and bonding one or more portions of the outer surface 110 to one or more adjacent prefabricated blocks at a lower temperature than that of required to melt the first material of the base 108. The prefabricated block 106 having the second material on one or more portions of the outer surface 110 can be formed while casting the prefabricated block 106 or by applying a coating of the second material on at least one portion of the base 108.

Furthermore, in some embodiments, at least one prefabricated block 106 of the plurality of prefabricated blocks 106 may include a functionally graded material. That is, the material composition of the at least one prefabricated block 106 gradually varies in one or more directions.

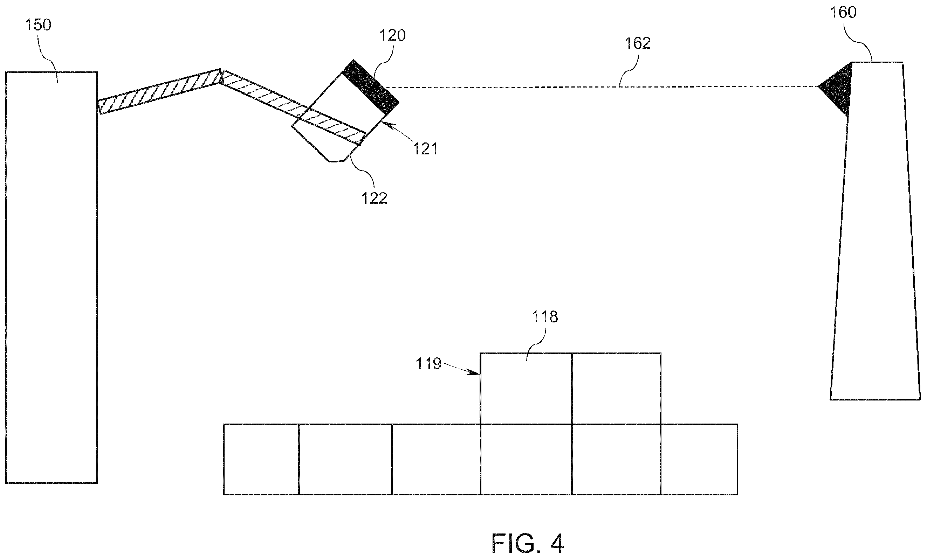

Fig. 3 is a flow chart of an additive manufacturing method 200 for manufacturing a component 100 (Fig. 1), in accordance with some embodiments. Figures 4-5 illustrates a schematic representation of one or more steps of the additive manufacturing method 200 for manufacturing the component 100. The additive manufacturing method 200 for manufacturing the component 100, as described herein may be performed in a controlled atmosphere comprising a predetermined concentration of oxygen, nitrogen, nitrogen containing gases, or combinations thereof.

Referring to Figures 1 and 3, in some embodiments, the additive manufacturing method 200 includes the step 202 of forming at least one prefabricated block 106 of the plurality of prefabricated blocks 106. In some embodiments, the step 202 includes forming the at least one prefabricated block 106 by casting. In certain embodiments, the step 202 includes forming the plurality of prefabricated blocks 106 by casting. Referring to Fig. 2, in some embodiments, the method 200 includes casting the prefabricated block 106 having the base 108 including the first material and the portion 111 of the outer surface 110 including the second material. In some embodiments, the method 200 includes forming the base 108 of the prefabricated block 106 by casting and disposing a coating of the second material on a portion of the base 108 to form the portion 111 of the outer surface 110. In some embodiments, the coating is disposed on one or more portions of the outer surface 110 that should be bonded to one or more adjacent prefabricated blocks. The coating may be applied by any suitable method such as a physical vapor deposition technique, a chemical vapor deposition technique, an electrodeless coating technique, a powder coating technique and the like.

The additive manufacturing method 200 includes the step 204 of arranging the plurality of prefabricated blocks 106 to form a plurality of layers 104 in a predefined manner. In some embodiments, the step 204 of arranging the plurality of prefabricated blocks 106 includes arranging each prefabricated block 106 of the plurality of prefabricated blocks 106 at a predetermined position to form the plurality of layers 104. In some embodiments, the step 204 of arranging the plurality of prefabricated blocks 106 includes placing said each prefabricated block 106 at the predetermined position in the arrangement. The placement of each prefabricated block 106 may be performed using a robotic device 150 as illustrated in Figures 4-5. In some embodiments, the step of placing each prefabricated block 106 includes picking and positioning each prefabricated block 106 at the predetermined position. In some embodiments, the step 204 includes repeating the step of placing a prefabricated block multiple times for placing each prefabricated block 106 for arranging the plurality of prefabricated blocks 106 in the desired predefined manner. In some embodiments, the step of arranging the plurality of prefabricated blocks 106 includes picking individual prefabricated blocks 106 followed by positioning the individual prefabricated blocks 106 at their respective predetermined positions to form the plurality of layers 104.

A predetermined position refers to a desired position of a prefabricated block of a plurality of prefabricated blocks in an arrangement of the plurality of prefabricated blocks to form a plurality of layers in a predefined manner. The predetermined position of a prefabricated block may include the location and orientation of the prefabricated block in the arrangement of the plurality of prefabricated blocks for forming a layout of a component.

In next step 206, the additive manufacturing method 200 includes melting one or more portions of each prefabricated block 106 of the plurality of prefabricated blocks 106. Such melting of one or more portions of each prefabricated block 106 enables bonding the plurality of prefabricated blocks 106 to each other. In some embodiments, the melting step 206 includes heating the plurality of prefabricated blocks 106 simultaneously after arranging them in the plurality of layers 104 in the predefined manner. In these embodiments, each prefabricated block 106 includes a base 108 and an outer surface 110 as illustrated in Fig. 2. The outer surface 110 includes the second material having a lower melting temperature than the melting temperature of the first material of the base 108. The heating may be performed at a temperature below the melting temperature of the first material of the base 108 and above the melting temperature of the second material at the outer surface 110. Such heating melts the one or more portions (including the second material) of the outer surface 110 to provide a melt between adjacent prefabricated blocks 106 of the plurality of prefabricated blocks 106 in the arrangement. The heating for the purpose may be carried out in any conventional heat treating furnace.

In some embodiments, melting one or more portions of each prefabricated block 106 is performed individually. In some embodiments, the melting step 206 includes melting one or more portions of an outer surface of each prefabricated block 106. In some embodiments, referring to Fig. 2, the method 200 includes melting the portion 111 of the outer surface 110 including the second material having lower melting temperature than the melting temperature of the first material of the base 108.

The step 206 of melting one or more portions of each prefabricated block 106 may be performed using a heating device for example, a focused energy source. Figures 4-5 show a focused energy source 160 for melting one or more portions of each prefabricated block 106. The focused energy source 160 may use a laser beam or an electron beam. As illustrated, the additive manufacturing method 200 includes directing laser or electron beam 162 from the focused energy source 160 to melt one or more portions of a prefabricated block 106 of the plurality of prefabricated blocks 106. The operation of the focused energy source 160, the arrangement of the plurality of prefabricated blocks 106 and the formation of the plurality of layers 104 of the prefabricated blocks 106 are controlled by a computer software and automated machine. The parameters of the focused energy source 160 may be selected depending on the material at the one or more portions of the outer surface of the prefabricated block 106 to be melted.

The focused energy source 160 may include laser device, an electron beam device, or a combination thereof. The laser device includes any laser device operating in a power range and a travel speed for melting the one or more portions of at least one prefabricated block 106 such as, but is not limited to, a fiber laser, a CO₂ laser, or a ND-YAG laser. In one embodiment, the power range includes, but is not limited to, between 125 watts and 500 watts, between 150 watts and 500 watts, between 150 watts and 400 watts, or any combination, range, or sub-range thereof. In another embodiment, the travel speed includes, but is not limited to, between 400 mm/sec and 1200 mm/sec, between 500 mm/sec and 1200 mm/sec, between 500 mm/sec and 1000 mm/sec, or any combination, sub-combination, range, or sub-range thereof. For example, in a further embodiment, the focused energy source 160 operates in the power range of between 125 watts and 500 watts, at the travel speed of between 400 mm/sec and 1200 mm/sec.

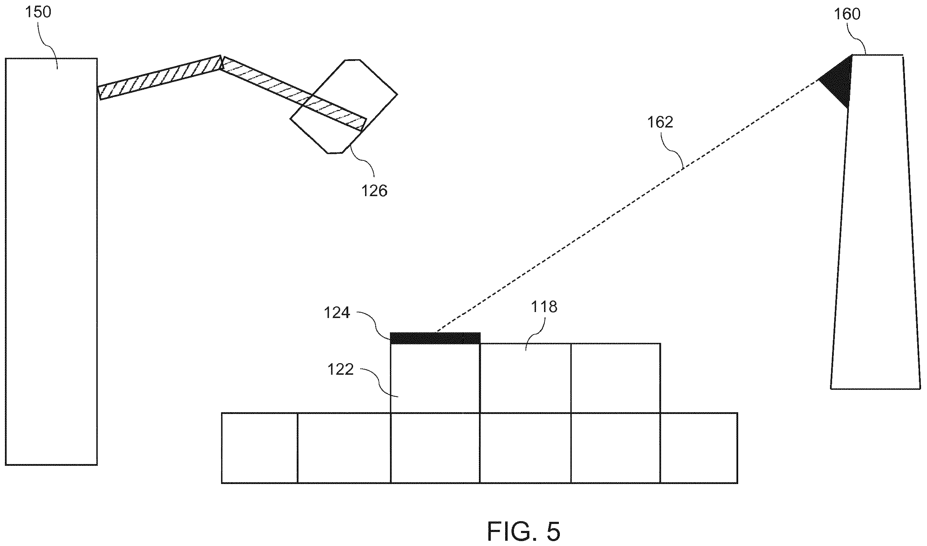

In some embodiments, the step 206 of melting one or more portions of each prefabricated block 106 is performed at least while placing each prefabricated block 106 or before placing a subsequent prefabricated block. As illustrated in Figures 4-5, the additive manufacturing method 200 includes directing laser or electron beam 162 from the focused energy source 160 to melt one or more portions of a prefabricated block 122 while placing the prefabricated block 122 or before placing a subsequent prefabricated block. In some embodiments, as illustrated in Fig. 4, the additive manufacturing method 200 includes melting a first portion 120 of an outer surface 121 of the prefabricated block 122 before placing the prefabricated block 122 at a predetermined position. The additive manufacturing method 200 further includes placing the prefabricated block 122 on or adjacent a previously placed prefabricated block 118 such that the outer surface 121 of the prefabricated block 122 is placed in contact to the outer surface 119 of the previously placed prefabricated block 118. In some embodiments, as illustrated in Fig. 5, the additive manufacturing method 200 includes melting a second portion 124 of the prefabricated block 122 after placing the prefabricated block 122 and before placing a subsequent prefabricated block 126. In some embodiments, the method 200 includes the steps of melting the first portion 120 of the outer surface 121 of the prefabricated block 122 before placing the prefabricated block 122 and melting the second portion 124 of the outer surface 121 of the prefabricated block 122 after placing the prefabricated block 122 and before placing a subsequent prefabricated block 126.

In some embodiments, the robotic device 150 (Figures 4-5) may include an integrated heating device, for example an integrated electric heating element. This may help in melting one or more portions of each prefabricated block 106 while placing the prefabricated blocks 106 using the robotic device 150. In these embodiments, the additive manufacturing method 200 includes melting one or more portions of each prefabricated blocks 106 of the plurality of prefabricated blocks 106 while placing each prefabricated block 106.

The additive manufacturing method 200 further includes the step 208 of cooling the melt of the one or more portions of each prefabricated block 106 to bond the plurality of prefabricated blocks 106 to each other to form the component 100, i.e., the additively manufactured component. The step 208 of cooling is performed after performing the step 204 of arranging the plurality of prefabricated blocks 106 and the step 206 of melting one or more portions of each prefabricated block 106. In some embodiments, the cooling step 208 includes cooling the melt of the one or more portions of said each prefabricated block 106 that are arranged in the plurality of layers 104 in the predefined manner. The cooling step 208 may be performed by cooling the melt using a controlled cooling rate in a controlled atmosphere to avoid cracking of the bond during freezing/solidification.

After completing the cooling step 208, the resulting component 100 may be subjected to one or more post-processing treatments to finalize the component 100. The post-processing treatment of the component 100 may include any suitable post-processing technique, such as, but is not limited to, hot isostatic pressing (HIP'ing), solution heat-treating (solutionizing), and/or stress relieving. In some embodiments, the additive manufacturing method 200 includes subjecting the component 100 to one or more post-processing treatments. The post-processing treatments may be performed in an inert environment. Such post-processing treatments are performed for homogenization and optimization of the microstructure of the material and stress relief of the additively manufactured component. In some embodiments, the one or more post-processing treatments may include the whole component furnace heat treatment, local heat treatment including surface heating, laser heating, electron beam heating, and the like.

It should be noted that the mechanical properties of the resulting additively manufactured component may depend on the metallic material, prefabricated blocks formed by casting, laser process parameters, electron beam parameters, post heat treatment parameters, or combinations thereof.

In some embodiments, an additive manufacturing method using the prefabricated blocks, as described herein may be combined with a powder-based additive manufacturing method to manufacture one or more components. For example, the combined additive manufacturing method can be used to fabricate certain difficult sections such as parts with overhangs of one or more components. In some embodiments, other bonding processes such as diffusion bonding may be used to join the prefabricated blocks.

An additively manufactured component including a plurality of prefabricated blocks formed using an additive manufacturing method as described herein, exhibits good surface quality because of the reduced porosity and good surface finish of the prefabricated blocks. In addition, use of the prefabricated blocks in the present additive manufacturing method advantageously enables to build components or sections of components having one or more of a single crystal, directionally solidified or polycrystalline forms (for example, microstructures) and to fabricate difficult sections such as parts with overhangs. Moreover, the present additive manufacturing method speeds up the process significantly and allows shorter manufacturing times as compared to manufacturing time required in conventional or existing additive manufacturing methods that include powder based processes. Significant time saving can further be achieved by varying the size of prefabricated blocks.

While only certain features of the disclosure have been illustrated and described herein, many modifications and changes will occur to those skilled in the art. It is, therefore, to be understood that the appended claims are intended to cover all such modifications and changes as fall within the scope of the disclosure.

Various aspects and embodiments of the present invention are defined by the following clauses:
1. An additive manufacturing method (200) comprising:
   arranging a plurality of prefabricated blocks (106) to form a plurality of layers (104) in a predefined manner,
   melting one or more portions of each prefabricated block (106) of the plurality of prefabricated blocks (106); and
   cooling a melt of the one or more portions of said each prefabricated block (106) to bond the plurality of prefabricated blocks (106) to each other to form an additively manufactured component (100).
2. The additive manufacturing method (200) of clause 1, further comprising forming at least one prefabricated block (106) of the plurality of prefabricated blocks (106) by casting.
3. The additive manufacturing method (200) of clause 1, wherein at least one prefabricated block (106) of the plurality of prefabricated blocks (106) comprises a material selected from the group consisting of a metallic material, polymer material, composite material and combinations thereof.
4. The additive manufacturing method (200) of clause 3, wherein the plurality of prefabricated blocks (106) comprises same or different materials.
5. The additive manufacturing method (200) of clause 3, wherein the at least one prefabricated block (106) of the plurality of prefabricated blocks (106) comprises a functionally graded material.
6. The additive manufacturing method (200) of clause 3, wherein the at least one prefabricated block (106) of the plurality of prefabricated blocks (106) comprises the metallic material in at least one of a single crystal form, a directionally solidified form or a polycrystalline form.
7. The additive manufacturing method (200) of clause 1, wherein at least one prefabricated block (106) of the plurality of prefabricated blocks (106) comprises a base (108) comprising a first material and an outer surface (110) comprising a second material.
8. The additive manufacturing method (200) of clause 7, wherein the second material has a melting temperature lower than a melting temperature of the first material.
9. The additive manufacturing method (200) of clause 7, further comprising forming the base (108) by casting.
10. The additive manufacturing method (200) of clause 7, further comprising disposing a coating on at least one portion (111) of the base (108) to form the outer surface (110).
11. The additive manufacturing method (200) of clause 9, wherein melting the one or more portions of said each prefabricated block (106) comprises melting the at least one portion (111) of the outer surface (110).
12. The additive manufacturing method (200) of clause 1, wherein melting the one or more portions of said each prefabricated block (106) is performed using a heating device (105).
13. The additive manufacturing method (200) of clause 1, further comprising subjecting the additively manufactured component (100) to one or more post-processing treatments.
14. An additively manufactured component (100) comprising:
   a plurality of prefabricated blocks (106) coupled to each other to form a plurality of layers (104) arranged in a predefined manner.
15. The additively manufactured component (100) of clause 13, wherein the plurality of prefabricated blocks (106) comprises a material selected from the group consisting of a metallic material, polymer material, composite material and combinations thereof.
16. The additively manufactured component (100) of clause 14, wherein the plurality of prefabricated blocks (106) comprises same or different materials.
17. The additively manufactured component (100) of clause 14, wherein at least one prefabricated block (106) of the plurality of prefabricated blocks (106) comprises a functionally graded material.
18. The additively manufactured component (100) of clause 14, wherein at least one prefabricated block (106) of the plurality of prefabricated blocks (106) comprises the metallic material in at least one of a single crystal form, a directionally solidified form or a polycrystalline form.
19. The additively manufactured component (100) of clause 14, wherein at least one prefabricated block (106) of the plurality of prefabricated blocks (106) comprises a base (108) comprising a first material and an outer surface (110) comprising a second material.
20. The additively manufactured component (100) of clause 18, wherein the second material has a melting temperature lower than a melting temperature of the first material.

## Claims

1. An additive manufacturing method (200) comprising:
arranging a plurality of prefabricated blocks (106) to form a plurality of layers (104) in a predefined manner,
melting one or more portions of each prefabricated block (106) of the plurality of prefabricated blocks (106); and
cooling a melt of the one or more portions of said each prefabricated block (106) to bond the plurality of prefabricated blocks (106) to each other to form an additively manufactured component (100).

2. The additive manufacturing method (200) of claim 1, further comprising forming at least one prefabricated block (106) of the plurality of prefabricated blocks (106) by casting.

3. The additive manufacturing method (200) of claim 1 or 2, wherein at least one prefabricated block (106) of the plurality of prefabricated blocks (106) comprises a material selected from the group consisting of a metallic material, polymer material, composite material and combinations thereof.

4. The additive manufacturing method (200) of claim 3, wherein the at least one prefabricated block (106) of the plurality of prefabricated blocks (106) comprises a functionally graded material.

5. The additive manufacturing method (200) of claim 3 or 4, wherein the at least one prefabricated block (106) of the plurality of prefabricated blocks (106) comprises the metallic material in at least one of a single crystal form, a directionally solidified form or a polycrystalline form.

6. The additive manufacturing method (200) of any one of claims 1 to 5, wherein at least one prefabricated block (106) of the plurality of prefabricated blocks (106) comprises a base (108) comprising a first material and an outer surface (110) comprising a second material.

7. The additive manufacturing method (200) of claim 6, wherein the second material has a melting temperature lower than a melting temperature of the first material.

8. The additive manufacturing method (200) of claim 6 or 7, further comprising disposing a coating on at least one portion (111) of the base (108) to form the outer surface (110).

9. The additive manufacturing method (200) of claim 8, wherein melting the one or more portions of said each prefabricated block (106) comprises melting the at least one portion (111) of the outer surface (110).

10. The additive manufacturing method (200) of any one of claims 1 to 9, further comprising subjecting the additively manufactured component (100) to one or more post-processing treatments.

11. An additively manufactured component (100) comprising:
a plurality of prefabricated blocks (106) coupled to each other to form a plurality of layers (104) arranged in a predefined manner.

12. The additively manufactured component (100) of claim 11, wherein the plurality of prefabricated blocks (106) comprises a material selected from the group consisting of a metallic material, polymer material, composite material and combinations thereof.

13. The additively manufactured component (100) of claim 12, wherein at least one prefabricated block (106) of the plurality of prefabricated blocks (106) comprises the metallic material in at least one of a single crystal form, a directionally solidified form or a polycrystalline form.

14. The additively manufactured component (100) of any one of claims 11 to 13, wherein at least one prefabricated block (106) of the plurality of prefabricated blocks (106) comprises a base (108) comprising a first material and an outer surface (110) comprising a second material.

15. The additively manufactured component (100) of claim 14, wherein the second material has a melting temperature lower than a melting temperature of the first material.
